Europäisches Patentamt

European Patent Office

Office européen des brevets

(19)

(11) **EP 1 005 712 B1**

(12) **EUROPÄISCHE PATENTSCHRIFT**

(45) Veröffentlichungstag und Bekanntmachung des Hinweises auf die Patenterteilung:
**07.05.2003 Patentblatt 2003/19**

(21) Anmeldenummer: **98945277.6**

(22) Anmeldetag: **21.08.1998**

(51) Int Cl.$^7$: **H02K 3/12**

(86) Internationale Anmeldenummer:
**PCT/EP98/05342**

(87) Internationale Veröffentlichungsnummer:
**WO 99/010963 (04.03.1999 Gazette 1999/09)**

(54) **WANDERFELDMASCHINE UND VERFAHREN ZU DEREN HERSTELLUNG**

TRAVELLING-WAVE MOTOR AND METHOD FOR PRODUCING SAME

MOTEUR A ONDES PROGRESSIVES ET SON PROCEDE DE FABRICATION

(84) Benannte Vertragsstaaten:
**DE FR GB IT**

(30) Priorität: **22.08.1997 DE 19736645**

(43) Veröffentlichungstag der Anmeldung:
**07.06.2000 Patentblatt 2000/23**

(73) Patentinhaber: **Continental ISAD Electronic Systems GmbH & Co. oHG**
**86899 Landsberg/Lech (DE)**

(72) Erfinder:
• **GRÜNDL, Andreas**
**D-81377 München (DE)**

• **HOFFMANN, Bernhard**
**D-82319 Starnberg (DE)**

(74) Vertreter: **Schmidt, Steffen J., Dipl.-Ing.**
**Wuesthoff & Wuesthoff,**
**Patent- und Rechtsanwälte,**
**Schweigerstrasse 2**
**81541 München (DE)**

(56) Entgegenhaltungen:
| | |
|---|---|
| DE-A- 3 803 752 | DE-A- 4 234 129 |
| DE-A- 4 234 175 | DE-A- 4 411 749 |
| DE-C- 895 192 | DE-C- 4 321 236 |

EP 1 005 712 B1

**Beschreibung**

Die vorliegende Erfindung betrifft eine Wanderfeldmaschine und ein Verfahren zu deren Herstellung. Insbesondere betrifft die Erfindung eine Mehrphasige Wanderfeldmaschine, die einen Ständer und einen Läufer aufweist, wobei wenigstens eine Ständerspule und/oder eine Läuferspule jeweils in wenigstens einer Nut des Ständers bzw. Läufers angeordnet ist, die Spule aus der Nut in Längsrichtung beidseitig unter Bildung eines Spulenkopfes herausragt, und der Querschnitt der Spule im Bereich der jeweiligen Nut vom Querschnitt der Spule im Bereich des Spulenkopfes abweicht. Eine derartige Maschine ist aus der DE 43 21 236 C1 bekannt.

Im Stand der Technik sind derartige Wanderfeldmaschinen (Asynchron-, Synchron-, Rotations- oder Linearmaschinen) bekannt, wobei unter dem Begriff "Wanderfeldmaschinen" sowohl Motoren als auch Generatoren verstanden sind. Hierbei sind die Spulen durch gewickelte Drahtgebilde geformt. Da die Drähte gegeneinander isoliert sein müssen und in der Regel einen kreisrunden Querschnitt aufweisen, beträgt der Füllfaktor der Nuten (Gesamt-Drahtquerschnitt/ Nutquerschnitt) etwa 35% - 40%. Da bei derartigen gewickelten Drahtspulen nicht sicher vorhersehbar ist, welche Windungen der gewickelten Drahtspulen nebeneinander zu liegen kommen, muß die Isolierschicht hierbei mindestens die Durchschlagfestigkeit der maximalen, an der Wicklung anliegenden Nenn-Spannung haben.

Der Füllfaktor kann in engen Grenzen durch Verwendung von geflochtenen oder geschlagenen Litzen zur Herstellung der Spulen verbessert werden, wobei die Spulen in die Nuten eingepreßt werden.

Außerdem überragt bei gewickelten Spulen der zur Montage der Spule in der Nut erforderliche Spulenkopf die Nut auf beiden Seiten relativ weit. Dies trägt einerseits zu erhöhtem Raumbedarf und andererseits zu erhöhten ohmschen Verlusten in der Spule bei.

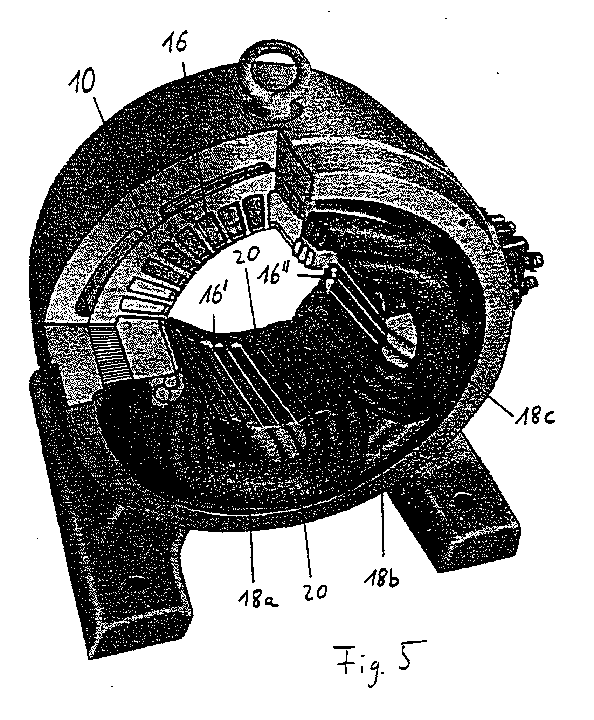

Fig. 5 zeigt einen Ständer einer Synchronmaschine gemäß dem Stand der Technik. Ersichtlich ist hierbei ein hohlzylindrischer Ständer 10 aus Eisenblech aufgeschichtet. In dem Ständer 10 sind radial nach innen offene Nuten 16 koaxial zur Mittellängsachse des Ständers angeordnet. In den Nuten 16 sind Spulen 18a, 18b, 18c längs des Umfangs des Ständers 10 verteilt angeordnet. Damit die Spulen 18a, 18b, und 18c von einer Nut 16' in eine in Umfangsrichtung davon beabstandete Nut 16" geführt werden können, hat jede der Spulen am stirnseitigen Ende des Ständers einen Spulenkopf 20. Wenn die Spulen mit phasenverschobenem Wechselstrom beschickt werden, bildet sich ein rotierendes Magnetfeld aus, in dem ein (nicht gezeigter) Läufer sich mitdreht. Ersichtlich haben hier die die Spulen bildenden Drähte einen konstanten (kreisförmigen) Querschnitt über die gesamte Länge, d.h. sowohl im Bereich der Nut als auch im Bereich der Spulenköpfe. Dies führt zu den oben erläuterten Nachteilen.

Aus der DE 43 21 236 A1 ist eine mehrphasige elektrische Maschine mit einer Wicklung aus flachen Leiterformteilen bekannt. Allerdings ist bei dieser bekannten Maschine ein wesentlicher Gesichtspunkt, daß eine Leiterquerschnittsreduzierung dadurch vermieden wird, daß beim Übergang aus der Nut in den Wickelkopf eine Leiterquerschnittsvergrößerung in Richtung der Nutbreite erfolgt. Auch an den Verbindungsstellen, die alle an den Wickelkopfstirnseiten liegen wird bei dieser bekannten Maschine eine Leiterquerschnittsverengung vermieden, indem die Leiterformteile in den Endbereichen in Nutrichtung verlängert sind. (Siehe Sp. 2, Z. 21 - 30 der DE 43 21 236 A1).

Aus der DE 38 03 752 A1 ist ein Ständer für einen Drehstromgenerator bekannt dessen Ständerblechpaket Nuten aufweist, in denen Ständerwicklungen angeordnet sind. Dabei haben die Ständerwicklungsabschnitte innerhalb der Nuten einen rechteckigen Querschnitt und die die Spulenköpfe bildenden Ständerwicklungsabschnitte außerhalb der Nuten einen kreisrunden Querschnitt (siehe Fig. 5 und zugehörige Beschreibung). Dabei sind die Ständerwicklungsabschnitte mit dem kreisrunden Querschnitt durch hohlzylindrische Leiter gebildet, während die Ständerwicklungsabschnitte mit dem rechteckigen Querschnitt durch Zusammenpressen des hohlzylindrischen Leiters gebildet sind (siehe Sp. 6, Z. 19 - 21 der DE 38 03 752 A1).

Aus der GB 1 329 205 ist es bekannt, die Wicklungen als Gußkörper herzustellen, bei denen die (aus den Nuten herausragenden) Endabschnitte einen größeren Querschnitt haben als die Leiterabschnitte in den Nuten (siehe S. 1, Z. 69 - 73 der GB 1 329 205).

Der Erfindung liegt die Aufgabe zugrunde, eine Wanderfeldmaschine bereitzustellen, bei der der Füllfaktor höher ist und/oder die Spulenköpfe die Nuten weniger überragen.

Zur Lösung dieser Aufgabe ist erfindungsgemäß die eingangs beschriebene Wanderfeldmaschine dadurch weitergebildet, daß das Verhältnis der Dicke der Ständer- bzw. Läuferspule im Bereich des Spulenkopfes zu der Dicke der Ständer- bzw. Läuferspule im Bereich der Nut dem Produkt der Phasenzahl der Wanderfeldmaschine und der Lochzahl jeder Spule entspricht.

Unter Querschnitt der Ständer- bzw. Läuferspule ist hierbei sowohl die Form als auch der Querschnitts-Flächeninhalt zu verstehen.

Damit ist sichergestellt, daß die Spulen im Kopfbereich in radialer Richtung nicht breiter sind als die Nuten tief sind.

Durch die erfindungsgemäße Ausgestaltung ist es möglich, die Form des Abschnittes der Spule im Innern der Nut so zu gestalten, daß der Füllfaktor steigt, während gleichzeitig auch die Möglichkeit besteht, die axiale Erstreckung des Spulenkopfes durch geeignete Gestaltung der Windung in diesem Bereich zu reduzieren.

Erfindungsgemäß ist der Querschnitt der Ständer- bzw. Läuferspule im Bereich der jeweiligen Nut größer als der Querschnitt der Ständer- bzw. Läuferspule im Bereich des Spulenkopfes. Damit steigt das Verhältnis des Leitungsanteils in der Nut zum Leitungsanteil in den beiden Spulenköpfen erheblich.

In einer derzeit besonders bevorzugten Ausführungsform ist die Ständer- bzw. Läuferspule aus Blechmaterial gebildet. Damit kann ein besonders hoher Füllfaktor von etwa 60% bis 80% erzielt werden. Außerdem kann die Isolation der einzelnen Windungen relativ dünn gestaltet sein, da eine definierte Orientierung der einzelnen Windungen zueinander in der Nut bzw. im Bereich des Spulenkopfes herrscht, so daß der maximale Spannungsabfall zwischen zwei benachbarten Windungen vorherbestimmbar ist. Weiterhin ist der Wärmewiderstand zwischen der Spule und den Wandungen der Nut erheblich geringer als im Stand der Technik. Dies erlaubt den Betrieb der Maschine bei höherer Leistung. Außerdem ist die Montage einfacher, da das Einlegen der einzelnen Blechabschnitte (oder von aus Blechabschnitten gebildeten Spulen) in die Nuten geringeren Aufwand erfordert als das Einbringen von vorgeformten Drahtspulen, die bei Einführen in die Nut verformt werden müssen. Dies erleichtert die Automatisierbarkeit des Herstellungsvorganges der Maschine.

Durch den Aufbau der Spulen auf Blechformteilen ist es möglich, die Nuten (bei gleicher Maschinenleistung) weniger tief zu gestalten als im Stand der Technik. Dies verringert die Verluste aufgrund von Streuinduktivitäten und den Blindleistungsbedarf.

In einer bevorzugten Ausführungsform ist die Ständer- bzw. Läuferspule im Bereich der Nut aus mehrlagigem geschichteten oder gefalteten Blechmaterial gebildet, und ist im Bereich des Spulenkopfes aus einlagigem oder wenigerlagigem Blechmaterial gebildet.

Erfindungsgemäß ist es möglich, die Ständer- bzw. Läuferspule entweder aus Kupfer- oder aus Aluminium-Blechmaterial (oder aus Legierungen der jeweiligen Metalle) herzustellen. Damit kann das Gewicht oder das Volumen der Maschine erheblich beeinflußt werden. Außerdem können auch die Spulenabschnitte in der Nut aus einem Material (z.B. Kupfer oder Aluminium), und die den Spulenkopf bildenden Spulenabschnitte aus einem anderen Material (z.B. Aluminium oder Kupfer) sein.

Bevorzugt ist jeweils eine Windung der Ständer- bzw. Läuferspule aus zwei im wesentlichen C-förmigen Blechteilen gebildet, deren offene Seiten einander zugewandt sind, und bei denen ein Schenkel des einen C-förmigen Blechteiles mit einem gegenüberliegende Schenkel des anderen C-förmigen Blechteiles verbunden ist.

Weitere Eigenschaften, Vorteile, Merkmale und Variationsmöglichkeiten der Erfindung werden anhand der nachstehenden Beschreibung einer derzeit bevorzugten Ausführungsform der Erfindung unter Bezugnahme auf die Zeichnungen erläutert.

Fig. 1 zeigt eine schematische Darstellung eines mehrphasigen Linearmotors in der Draufsicht, der eine Ständerwicklung aufweist, die gemäß der Erfindung gestaltet ist.

Fig. 2 zeigt eine schematische Darstellung eines Blechteils in der Draufsicht, das zur Herstellung eines C-förmigen Blechteiles für die Bildung einer halben Windung gemäß der Erfindung geeignet ist.

Fig. 3 zeigt eine schematische Darstellung eines C-förmigen Blechteiles gemäß Fig. 2 in der Seitenansicht, das eine halbe Windung gemäß der Erfindung bildet.

Fig. 4 zeigt eine schematische teilweise Darstellung eines Wicklungspaketes, das in eine Nut des Ständers gemäß Fig. 1 eingesetzt wird.

Fig. 5 zeigt eine perspektivische Darstellung eines Ständers einer Synchronmaschine gemäß dem Stand der Technik.

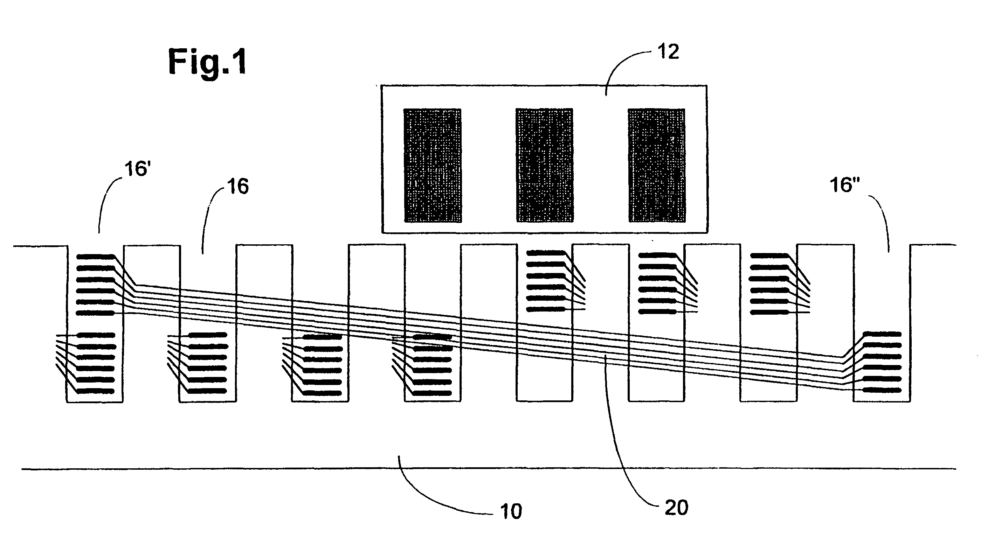

Fig. 1 zeigt einen Ausschnitt aus einer Niederspannungs-Wanderfeldmaschine (hier eines permanenterregten Linearmotors mit weniger als etwa 60 Volt Betriebsspannung), der einen Ständer 10 und einen Läufer 12 aufweist. Der Ständer 10 ist aus geschichteten Eisenblechen aufgebaut und weist eine Vielzahl von Nuten 16 auf. In den Nuten sind in an sich bekannter Weise (siehe z.B. Fig. 5) die Spulen zur Erzeugung des Wechselfeldes verteilt angeordnet. Genauer gesagt ist eine Spule 18 in zwei Nuten 16', 16" angeordnet, wobei die in den beiden Nuten 16', 16" angeordnet Spulenabschnitte durch zwei Spulenköpfe 20 (von denen in Fig. 1 nur einer zu sehen ist) miteinander verbunden sind. Zur besseren Übersicht ist lediglich eine Spule (von der Nut 16' zur Nut 16" reichend) komplett dargestellt. Die übrigen Spulen sind jeweils nur teilweise (in den Nuten 16) gezeigt.

Ein wesentlicher Aspekt ist dabei, daß der Querschnitt jeder einzelnen Windung der Ständerspule 18 im Bereich der jeweiligen Nuten 16', 16" größer ist, als der Querschnitt jeder einzelnen Windung im Bereich der Spulenkopfes 20. Genauer gesagt ist die Anordnung so getroffen, daß der Querschnitt jeder Windung im Kopfbereich soweit reduziert ist, daß alle Windungen in radialer Richtung nebeneinander Platz finden, ohne den Ständer in radialer Richtung zu überragen. Damit bleibt die Baugröße der Maschine in radialer Richtung im wesentlichen durch den Durchmesser des Läufers begrenzt, während in axialer Richtung gegenüber dem Stand der Technik eine nennenswerte Verringerung möglich ist, da die einzelnen Spulen sich nicht mehr in axialer Richtung überragen (wie dies beim Stand der Technik z.B. Fig. 5 der Fall ist).

Dies wird in der vorliegenden Ausführungsform der Erfindung dadurch ermöglicht, daß die Ständerspulen 18 aus Kupfer- oder Aluminium-Blechmaterial gebildet sind.

Eine Möglichkeit, dies herzustellen besteht darin, daß die Ständerspulen 18 im Bereich der Nuten 16 aus mehrlagigem geschichteten oder gefalteten Blechmaterial gebildet sind, und im Bereich der Spulenköpfe 20 aus einlagigem Blechmaterial oder aus Blechmaterial mit weniger Lagen als im Bereich der Nuten gebildet ist. Damit ist es möglich, die für die jeweilige Phasenzahl erforderliche Anzahl von Spulenköpfen 20 über die Nuten hinwegzuführen, die jeweils zwischen den Nuten 16' und 16" einer Spule liegen. Wenn z.B. eine dreiphasige Maschine in Zwei-Loch-Wicklung ausgeführt ist, reicht ein Spulenkopf 20 immer über sechs (3 Phasen * Zwei Löcher) dazwischenliegende Nuten 16 hinweg und verbindet die Spulenabschnitte in den Nuten 16' und 16". In diesem Fall muß das Blechmaterial im Nutbereich jeder Windung der Spule sechsmal dicker sein als im Kopfbereich jeder Windung der Spule. Es gilt also folgender Zusammenhang:

$$\frac{\text{Dicke jeder Windung der Spule im Nutbereich}}{\text{Dicke jeder Windung der Spule im Kopfbereich}} = \text{Phasenzahl * Lochzahl jeder Wicklung}$$

Damit ist sichergestellt, daß die Spulen im Kopfbereich in radialer Richtung nicht breiter sind als die Nuten (in radialer Richtung) tief sind.

Jeweils eine Windung der Ständerspule 18 ist aus zwei im wesentlichen C-förmigen Blechteilen gebildet, deren offene Seiten einander zugewandt sind, und bei denen ein Schenkel 32 des einen C-förmigen Blechteiles mit einem gegenüberliegenden Schenkel 40 des anderen C-förmigen Blechteiles verbunden ist. Die jeweils anderen Schenkel 40 sind mit einem Schenkel 32 eines davorliegenden bzw. dahinterliegenden C-förmigen Blechteiles zur Bildung der vorherigen bzw. folgenden Windung verbunden.

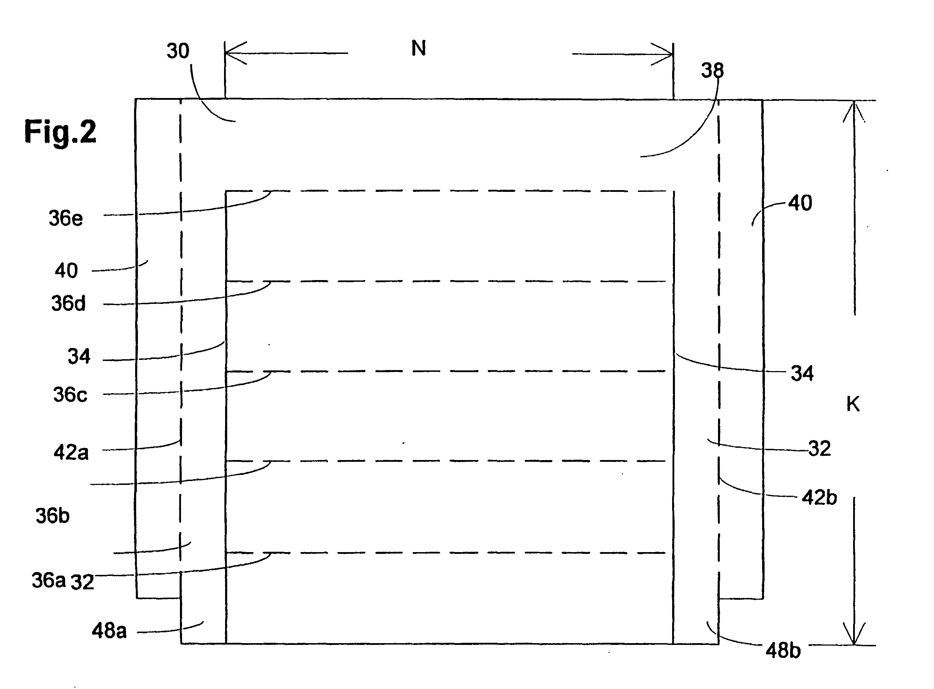

In Fig. 2 ist ein Blechstanzteil gezeigt, das zur Herstellung eines vorstehend beschriebenen C-förmigen Blechteiles dient. Das Blechstanzteil hat eine im wesentlichen rechteckige Gestalt, wobei der mit N bemaßte Nutenabschnitt 30 in einer Nut zu liegen kommt, während die mit K bemaßten Kopfabschnitte 32 jeweils einen halben Spulenkopf 20 bilden. Längs der parallelen Einschnitte 34 werden die Kopfabschnitte 32 begrenzt. Das zwischen den beiden Schnittlinien 34 liegende Blechmaterial wird entlang der Knicklinien 36a, 36b, 36c, 36d, und 36e zickzack-förmig umgefalzt, so daß ein Stapel von Blechabschnitten über dem die beiden Kopfabschnitte 32 verbindenden Blechabschnitt 38 liegt. In dieser Ausführungsform sind die Kopfabschnitte 32 durchgehend mit einer einfachen Materialdicke zu gestalten. In diesem Fall werden beim Zusammenfügen zweier einzelner C-förmiger Blechteile jeweils ein solcher Endbereich des einen C-förmigen Blechteiles mit einem solchen Endbereich des anderen C-förmigen Blechteiles (auf Stoß gelegt und) stumpf verschweißt.

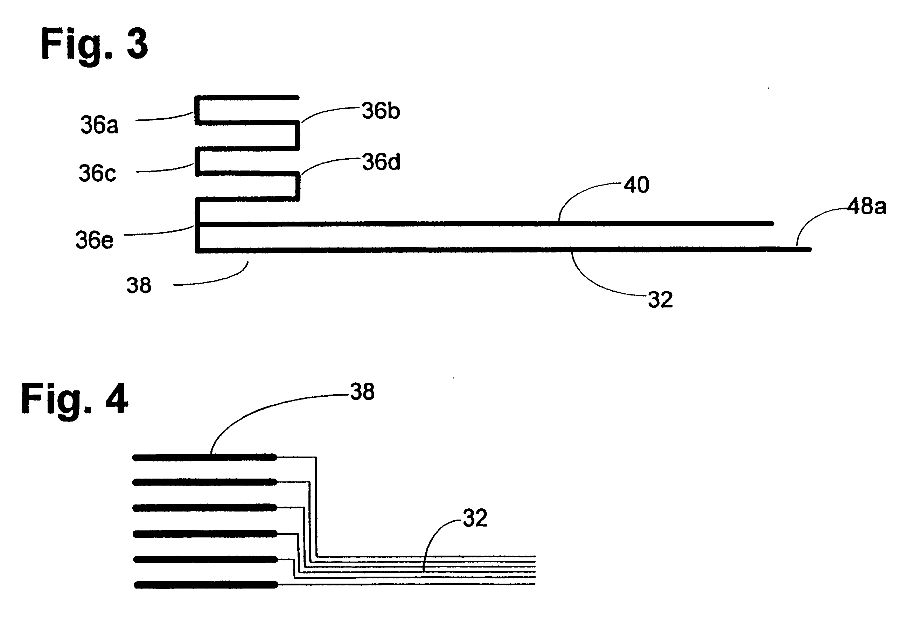

Alternativ dazu ist es jedoch auch möglich, daß jeder der Kopfabschnitte 32 mit einem außenliegenden Randabschnitt 40 versehen wird, der entlang von Knicklinien 42a, 42b umgefalzt wird. Damit haben im vorliegenden Beispiel die Kopfabschnitte 32 eine doppelte Materialdicke. Dies erfordert jedoch auch, daß die Nutenabschnitte eine zweimal sechsfache (also 12-fache) Materialdicke des Blechmaterials haben (um die Nuten radial nicht zu überragen). Die Randabschnitte 40 sind an ihren vom Nutenabschnitt 30 abliegenden Ende etwas verkürzt, so daß nach dem Umfalzen entlang der Knicklinien 42a, 42b jeweils ein kurzer Endbereich 48a, 48b entsteht, der nur eine einfache Materialdicke des Blechmaterials aufweist. Beim Zusammenfügen zweier einzelner C-förmiger Blechteile werden jeweils ein solcher Endbereich des einen C-förmigen Blechteiles über einen solchen Endbereich des anderen C-förmigen Blechteiles gelegt und z.B. verschweißt. Eine Seitenansicht eines derartig geformten C-förmigen Blechteiles ist in Fig. 3 gezeigt.

In Fig. 4 ist ein Stapel solcher C-förmigen Blechteile übereinandergelegt, wobei die Kopfteile 32 gegenüber den Nutabschnitten 30 abgekröpft und auf minimalen Abstand zusammengeführt sind. Dies ist ein wesentlicher Aspekt der vorliegenden Erfindung, da dies eine Möglichkeit ist, die von der Polzahl und der Phasenzahl der Maschine abhängige Anzahl von Spulen entlang des Ständers bei äußerst niedriger Bauhöhe der Spulenköpfe über die Nuten zu führen.

Insbesondere bei Einsatz von Aluminium-Blechmaterial kann bei Nieder- oder Mittelspannungsmaschinen mit relativ niedriger Nenn-Spannung aufgrund der niedrigen Spannung zwischen den einzelnen Windungen durch einfaches Anodisieren des Aluminium-Blechmaterial eine äußerst einfache und dünne Isolierschicht auf die Blechteile aufgebracht werden.

Da bei Nieder- oder Mittelspannungsmaschinen nur relativ wenige Windungen (in der Größenordnung von etwa 5 - 15) pro Spule erforderlich sind, eignet sich die vorliegende Erfindung insbesondere für diese Klasse von Maschinen.

Vorstehend ist das erfindungsgemäße Konzept anhand einer Ständerspule eines Linearmotors erläutert. Für einen Fachmann ist jedoch ersichtlich, daß dieses Konzept auch für Läuferspulen bzw. für Rotationsmaschinen einsetzbar ist, ohne dabei den Erfindungsbereich zu verlassen, der auch durch die nachfolgenden Ansprüche definiert ist.

**Patentansprüche**

1.  Mehrphasige Wanderfeldmaschine, die einen Ständer (10) und einen Läufer (12) aufweist, wobei

    - wenigstens eine Ständerspule (18) und/oder eine Läuferspule jeweils in wenigstens einer Nut (16) des Ständers (10) bzw. Läufers angeordnet ist,
    - die Ständer- (18) bzw. Läuferspule aus der Nut (16) in Längsrichtung beidseitig unter Bildung eines Spulenkopfes (20) herausragt,
    - der Querschnitt der Ständer- (18) bzw. Läuferspule im Bereich der jeweiligen Nut (16) vom Querschnitt der Ständer-(18) bzw. Läuferspule im Bereich des Spulenkopfes (20) abweicht, **dadurch gekennzeichnet, daß**
    - das Verhältnis der Dicke der Ständer- (18) bzw. Läuferspule im Bereich der Nut (16) zu der Dicke der Ständer-(18) bzw. Läuferspule im Bereich des Spulenkopfes (20) dem Produkt der Phasenzahl der Wanderfeldmaschine und der Lochzahl jeder Spule entspricht.

2.  Wanderfeldmaschine nach Anspruch 1, **dadurch gekennzeichnet, daß** der Querschnitt der Ständer- bzw. Läuferspule im Bereich der jeweiligen Nut größer ist als der Querschnitt der Ständer- bzw. Läuferspule im Bereich des Spulenkopfes.

3.  Wanderfeldmaschine nach Anspruch 1 oder 2, **dadurch gekennzeichnet, daß** die Ständer- bzw. Läuferspule aus Blechmaterial gebildet ist.

4.  Wanderfeldmaschine nach Anspruch 3, **dadurch gekennzeichnet, daß** die Ständer- bzw. Läuferspule im Bereich der Nut aus mehrlagigem geschichteten oder gefalteten Blechmaterial gebildet ist, und im Bereich des Spulenkopfes aus einlagigem oder wenigerlagigem Blechmaterial gebildet ist.

5.  Wanderfeldmaschine nach Anspruch 1, 2, 3 oder 4, **dadurch gekennzeichnet, daß** die Ständer- bzw. Läuferspule aus Kupferoder Aluminium-Blechmaterial gebildet ist.

6.  Wanderfeldmaschine nach Anspruch 1, 2, 3, 4 oder 5, **dadurch gekennzeichnet, daß** jeweils eine Windung der Ständer- bzw. Läuferspule aus zwei im wesentlichen C-förmigen Blechteilen gebildet ist, deren offene Seiten einander zugewandt sind, und bei denen ein Schenkel (40) des einen C-förmigen Blechteiles mit einem gegenüberliegenden Schenkel (40) des anderen C-förmigen Blechteiles verbunden ist.

**Claims**

1.  A polyphase travelling wave machine which comprises a stator (10) and a rotor (12), wherein

    - at least one stator coil (18) and/or one rotor coil is arranged in at least one groove (16) of the stator (10) or the rotor, respectively,
    - the stator coil (18) or the rotor coil, respectively, projects from the groove (16) at both sides in a longitudinal direction under the formation of a coil head (20),
    - the cross section of the stator coil (18) or of the rotor coil, respectively, in the area of the respective groove (16) differs from the cross section of the stator coil (18) or the rotor coil, respectively, in the area of the coil head (20), **characterised in that**
    - the ratio of the thickness of the stator coil (18) or the rotor coil, respectively, in the area of the groove (16) to the thickness of the stator coil (18) or the rotor coil, respectively, in the area of the coil head (20) corresponds to the product of the number of phases of the travelling wave machine and the number of holes of each coil.

2.  The travelling wave machine according to Claim 1, **characterised in that** the cross section of the stator or rotor coil, respectively, in the area of the respective groove is larger than the cross section of the stator or rotor coil, respectively, in the area of the coil head.

3.  The travelling wave machine according to Claim 1 or 2, **characterised in that** the stator or the rotor coil, respectively, is formed from sheet metal material.

4.  The travelling wave machine according to Claim 3, **characterised in that** the stator or the rotor coil, respectively, in the area of the groove is formed from multilayer stacked or folded sheet metal material, and in the area of the coil head from single-layer or fewer-layer sheet metal material.

5. The travelling wave machine according to Claim 1, 2, 3, or 4, **characterised in that** the stator or the rotor coil, respectively, is formed from copper or aluminium sheet metal material.

6. The travelling wave machine according to Claim 1, 2, 3, 4, or 5, **characterised in that** one winding each of the stator or the rotor coil, respectively, is formed by two essentially C-shaped sheet metal parts the open sides of which are facing each other and wherein one leg (40) of the one C-shaped sheet metal part is connected with an opposite leg (40) of the other C-shaped sheet metal part.


**Revendications**

1. Moteur polyphasé à ondes progressives qui présente un stator (10) et un rotor (12),

   - au moins une bobine (18) statorique et/ou une bobine rotorique étant disposée dans au moins une encoche (16) du stator (10) ou du rotor,
   - la bobine (18) statorique ou rotorique faisant saillie des deux côtés dans le sens de la longueur pour former une tête de bobine (20) en dehors de l'encoche (16),
   - la section de la bobine (18) statorique ou rotorique située dans la zone de l'encoche (16) occupée étant différente de la section de la bobine (18) statorique ou rotorique située dans la zone de la tête de bobine (20), **caractérisée en ce que**
   - le rapport de l'épaisseur de la bobine (18) statorique ou rotorique située dans la zone de l'encoche (16) à l'épaisseur de la bobine (18) statorique ou rotorique située dans la zone de la tête de bobine (20) est égal au produit du nombre de phases du moteur à ondes progressives et du pas polaire de chaque bobine.

2. Moteur à ondes progressives selon la revendication 1, **caractérisé en ce que** la section de la bobine statorique ou rotorique située dans la zone de l'encoche occupée est plus grande que la section de la bobine statorique ou rotorique située dans la zone de la tête de bobine.

3. Moteur à ondes progressives selon la revendication 1 ou 2, **caractérisé en ce que** la bobine statorique ou rotorique est constituée d'un matériau en tôle.

4. Moteur à ondes progressives selon la revendication 3, **caractérisé en ce que** la bobine statorique ou rotorique est, dans la zone de l'encoche, constituée d'un matériau en tôle multicouche lamellée ou pliée et, dans la zone de la tête de bobine, d'un matériau en tôle monocouche ou composée d'un plus petit nombre de couches.

5. Moteur à ondes progressives selon la revendication 1, 2, 3 ou 4, **caractérisé en ce que** la bobine statorique ou rotorique est constituée d'un matériau en tôle d'aluminium ou de cuivre.

6. Moteur à ondes progressives selon la revendication 1, 2, 3, 4 ou 5, **caractérisé en ce qu'**une spire de la bobine statorique ou rotorique est à chaque fois constituée de deux pièces en tôle pour l'essentiel en forme de C, dont les côtés ouverts sont tournés l'un vers l'autre, et dans le cadre desquelles une branche (40) d'une pièce en tôle en forme de C est reliée à une branche (40) diamétralement opposée de l'autre pièce en tôle en formé de C.

Fig.1

**Fig.2**

30 — N — 38

36e

40

36d

34

36c

42a

36b

36a 32

48a

40

34

K

32

42b

48b

EP 1 005 712 B1

# Fig. 3

36a — 36b

36c — 36d

40

48a

36e

38 — 32

EP 1 005 712 B1

# Fig. 4

38

32

Fig. 5